# EUROPEAN PATENT APPLICATION

(11) **EP 3 330 768 A1**
(43) Date of publication of application: **06.06.2018**
(21) Application number: 15899321.2
(22) Date of filing: 30.07.2015
(51) Int. Cl.: G02B 27/01

(54) **HEAD-MOUNTED ELECTRONIC DEVICE**

(71) Applicant: Shenzhen Royole Technologies Co., Ltd., Shenzhen, Guangdong 518172 (CN)
(72) Inventor: YANG, Songling, Shenzhen Guangdong 518052 (CN)
(74) Representative: Plougmann Vingtoft a/s
(86) International application number: PCT/CN2015/085638
(87) International publication number: WO 2017/015969

(57) **Abstract**

A head-mounted electronic device (8) comprises two earphones (10), one covering member (20) and two display members (30). The covering member (20) connects to the two earphones (10) and comprises a dimming portion (24) that is located in front of the eyes of a user and whose transparency can be changed. The display members (30) are used for displaying and projecting images to the outside. Each display member (30) rotatably connects to one corresponding earphone (10) and can rotate to a first position located in front of the eyes and a second position staggering the eyes. At the first position, the dimming portion (24) is in a light shading state. At the second position, the dimming portion (24) is in a light transmission state. Without taking off the head-mounted electronic device (8), a user can conveniently switch between watching images displayed on the head-mounted electronic device (8) and watching environment scenes outside the head-mounted electronic device (8), thereby bringing great convenience to the user and improving the experience feeling of the user.

## Description

### FIELD

The present disclosure relates to a head-mounted electronic device, and more particularly to a head-mounted electronic device having an immersive type display mode and a head-up type display mode.

### BACKGROUND

Currently, a head-mounted electronic device is a near-eye display device, which produces an image and projects it to eyes of a user, such that the user can see an enlarged virtual image, thereby acquiring a display effect of a larger area. There are two types of head-mounted electronic device including a see-through type and immersive type. The see-through type head-mounted electronic device can allow the user to see a displayed image superimposed on an actual scene, and the user who wears the immersive type head-mounted electronic device can only see the displayed image. In the above two types, the former is suitable for purpose of assisting reality, for example, superposing of a branch road sign with the corresponding road when applied to navigation, and the latter is more suitable for making the user enter a created environment, for example, enter a given game scene. When wearing the immersive type head-mounted electronic device, if the user wants to see the external environment, he generally needs to take down the electronic device, which is inconvenient.

### SUMMARY

On that account, a head-mounted electronic device capable of displaying in an immersive type and by which the external environment can be easily watched is provided by the present disclosure.

The head-mounted electronic device provided by an embodiment of the present disclosure includes: two earphones; one covering member connecting to the two earphones and including a dimming part with a changeable transparency in front of eyes of a user; and two display members configured to display and project an image outwards, the respective display member rotatably connecting to one corresponding earphone and being able to rotate to a first position located in front of the eyes and a second position staggering the eyes; in which, at the first position, the dimming part is in a light shielding state, and at the second position, the dimming part is in a light transmitting state.

In the present disclosure, the user can easily switch between watching the image displayed by the head-mounted electronic device and the scene of an external environment of the head-mounted electronic device without taking off the head-mounted electronic device, thus greatly facilitating the user, thereby improving experience feeling of the user.

### BRIEF DESCRIPTION OF THE DRAWINGS

The following drawings are used for describing embodiments of the present disclosure in detail in combination with specific embodiments. It should be understood that, elements shown in the drawings do not represent their actual dimension and proportional relation, and are just intended to clearly explain schematic views which are shown out, and could not be construed to limit the present disclosure.
Fig. 1 is a schematic view of a head-mounted electronic device provided by an embodiment of the present disclosure, in which, each display member of the head-mounted electronic device is located at a second position.
Fig. 2 is a partially exploded view of the head-mounted electronic device of Fig. 1.
Fig. 3 is a schematic view of another embodiment of a contact member of Fig. 1.
Fig. 4 is a schematic view of an optical display module of a head-mounted display member of Fig. 1.
Fig. 5 is a schematic view illustrating the display member of Fig. 1 is located at a first position.

### DETAILED DESCRIPTION

In order to make objectives, technical solutions and advantages of the present disclosure more clear and apparent, the present disclosure will be further described in detail in combination with multiple embodiments and drawings in the following. It should be understood that, the specific embodiments described herein are just used to explain the present disclosure, and are not used to limit the present disclosure.

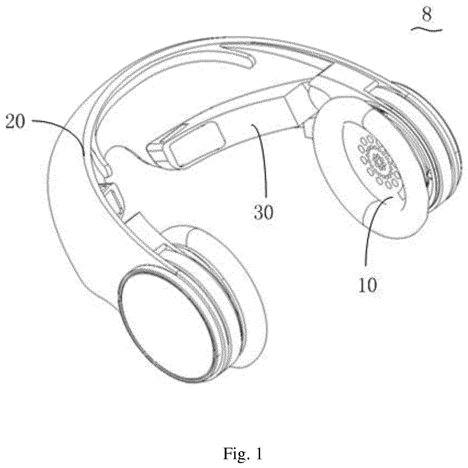

Referring to Fig. 1, a head-mounted electronic device 8 is provided by an embodiment of the present disclosure and can be a head-mounted video player, a head-mounted gaming device or a head-mounted navigation device and the like. The head-mounted electronic device 8 includes two earphones 10, one covering member 20 connecting the two earphones 10 and two display members 30 rotatably connecting to the earphones 10. The covering member 20 provides the two earphones 10 with a clamping force to clamp ears of a user, when the user wears the head-mounted electronic device 8, such that the user can steadily wear the head-mounted electronic device 8. The earphones 10 and the display members 30 are respectively configured to output sounds and images to the user, thereby achieving audio and visual functions.

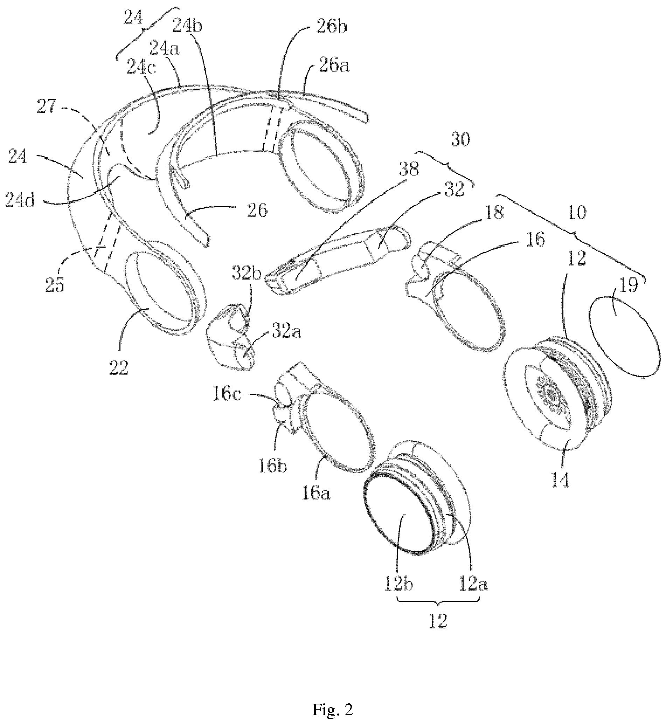

Referring to Fig. 2, each earphone 10 includes one housing 12, one earphone cover 14, one loudspeaker (not shown in the drawings), one mounting member 16 and one power source 18 disposed to the mounting member 16. The housing 12 is substantially cup-shaped and includes a cylinder-shaped wall 12a and a side wall 12b. The side wall 12b seals the cylinder-shaped wall 12a, to form the housing 12. The housing 12 defines an accommodating space and the loudspeaker is accommodated in the accommodating space. The earphone cover 14 is fixed to a side of the cylinder-shaped wall 12a opposite to the side wall 12b. There is no big difference between the structure of the earphone 10 and that of an existing earphone structure, which will not be elaborated in the present description. The mounting member 16 includes one ring part 16a and one mounting part 16b. The ring part 16a is sleeved over the cylinder-shaped wall 12a of the earphone 10, such that the ring part 16a connects to the earphone 10, and the mounting part 16b locates at one side of the ring part 16a and defines one accommodating groove 16c thereon. In the other embodiments, the mounting member 16 can also be integrally formed with the earphone 10, which is not limited to the assembly method of the present embodiment. In the present embodiment, the power source 18 is an electric motor and a gear set essentially configured for reducing an output rotational speed while improving an output torque. The power source 18 is accommodated in the accommodating groove 16c. The side wall 12b is provided with a touch device 19. The touch device 19 can sense a touch operation from the user, for example a printed circuit board with a set image. Therefore the user can apply required operations to the whole head-mounted electronic device 8 through the touch device 19.

The covering member 20 connects to the two earphones 10 and covers the space in front of eyes of the user. The covering member 20 includes a dimming part 24. A transparency of the dimming part 24 is changeable. The dimming part 24 locates in front of the eyes. Specifically, in the present embodiment, the covering member 20 is substantially C-shaped and includes two connecting parts 22. The two connecting parts 22 respectively locate at two sides of an opening of the C-shaped. The dimming part 24 locates between the connecting parts 22 and forms the C-shaped. In the present embodiment, each of the connecting parts 22 is ring-shaped, and is sleeved over a cylinder-shaped wall 12a of the earphone 10, so the connecting parts 22 connect with the earphone 10. The dimming part 24 includes an upper part 24a, a lower part 24b and a middle part 24c. The middle part 24c locates between the upper part 24a and the lower part 24b. The upper part 24a is adjacent to forehead of the user and the lower part 24b is far away from the forehead when the user wears the head-mounted electronic device 8. The middle part 24c protrudes outwards in a direction of departing away from the earphone 10 relative to the upper part 24a and the lower part 24b. A middle portion of the lower part 24b concaves towards the middle part 24c, such that one notch 24d is formed in the middle portion of the lower part 24b. When the user wears the head-mounted electronic device, the nose of the user abuts against an upper part of the notch 24d, thereby supporting the covering member 20. It could be understood that, in the other embodiments, in order to be suitable for more users, retractable adjusting parts 25 can be further provided between the dimming part 24 and the two connecting parts 22, as shown in Fig. 2, such that the distance between the dimming part 24 and the two connecting parts 22 can be adjustable.

The transparency of the dimming part 24 can be changed. In particular, the dimming part 24 can be made from an electrochromic element, which generally includes, in sequence, a glass transparent base material, a first transparent conducting layer, an electrochromic layer, an electrolyte layer, an ion storage layer, a second transparent conducting layer and a transparent base material. When a certain voltage is applied between the two transparent conducting layers, an oxidation reduction reaction is took place in the electrochromic layer under the action of the voltage, and the color of electrochromic layer is changed accordingly. When the voltage recedes, the electrochromic layer can be recovered to a far state. The principles and specific implementation are known by those skilled in the art, which will not be elaborated in the present description. Thus, by controlling the voltage applied on the dimming part 24, the electrochromic element can be in a light shielding state or a light transmitting state. In the light shielding state, most external light can't pass through; in contrast, in the light transmitting state, the most external light can pass through the electrochromic element. Certainly, in the present disclosure, in order to change transparency, the dimming part 24 can also be replaced by other elements having the same function, for example, the dimming part 24 is made from a liquid crystal display screen having a transparent TTF base, and by adjusting the state of the liquid crystal, the liquid crystal display screen can achieve the light shielding effect and light transmitting effect as the above electrochromic element. In the present disclosure, the dimming part 24 located in front of the left eye and the right eye can be configured as a whole piece as shown in Fig. 1, as well as can be configured as two separate pieces connected by a connecting member 27 as shown in Fig. 2. The connecting member 27 is made from a material having no dimming function, such as plastic or metal.

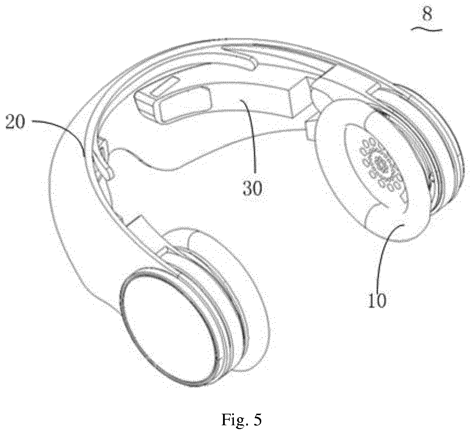

Preferably, the covering member 20 further includes a contact member 26. The contact member 26 can contact with the forehead of the user, and includes a fixing part 26a fixed to the upper part 24a and a contact part 26b extending from a middle position of the fixing part to the forehead of the user. The contact part 26b has an elastic deformation capacity, and an end width of the contact part 26b is smaller than a forehead width of the user, such that when the user wears the head-mounted electronic device, the contact part 26b is deformed, thus generating a greater frictional force with the forehead, which is convenient for the user to wear. At the same time, a surface of the contact part 26b facing the user can also be provided with a soft fabric such as a sponge, so as to make the user more comfortable when wearing and increase the light shielding effect. It could be understood that, in order to achieve that the covering member 20 has a better light shielding effect, a contact member 26' can also be that as shown in Fig. 5, a difference between the contact member 26' and the contact member 26 is that, a contact part 26b' is plate-shaped and extends obliquely from a fixing part 26a' to the forehead of the user. When the head-mounted electronic device 8 is worn, the contact part 26b' abuts against the forehead of the user, thereby effectively preventing the covering member 20 from gliding down effectively, meanwhile shielding the light effectively. Certainly, the lower part 24b can also be provided with a similar contact member configured to be in contact with face of the user and have the light shielding effect.

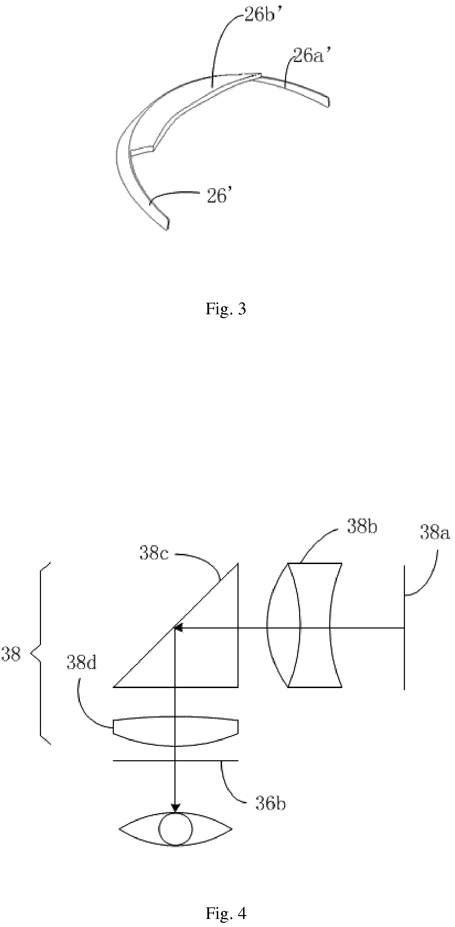

Each of the display members 30 is rotatably connected to the corresponding earphone 10, and can be rotated to a first position in front of the eyes, as shown in Fig. 5, and can be rotated to a second position staggering the eyes, as shown in Fig. 1. At the first position, the dimming part 20 is in the light shielding state; and at the second position, the dimming part 20 is in the light transmitting state. Specifically, in the present embodiment, the display member 30 includes a case 32 and an optical display module 38 accommodated in the case 32. A side 32a of the case 32 is connected to the power source 32, and another side opposite to the side 32a defines a light outlet 32b through which light of the optical display module 38 passes. Thus, in the case that the power source 32 actuates a small angle, the side at which the light outlet 32b is located can move by a large radian, thereby facilitating the side at which the light outlet 32b locates to quick switch between the first position and the second position. Referring to Fig. 4, the optical display module 38 includes one image source 38a, one first lens module 38b, one refractive lens module 38c and one second lens module 38d. The image source 38a can be configured as an LCD display module or an OLED display module, which is generally a micro display module with a high displaying density. The refractive lens module 38c is configured to reflect the image lights emitted from the image source 38a, so as to change a direction of the path of the image lights, such that the first and second lens modules 38b and 38d need not to be overlaid in the same direction, and an interior space of the case 32 can be flexibly used. The first and second lens modules 38b and 38d are configured to suitably refract image lights emitted from the image source 38a, such that the user can clearly see a visual image with a set dimension. Specific structure and the amount of lenses of the first and second lens modules 38b and 38d and the refractive lens module 38c are not limited to that shown in Fig. 4, and could be determined according to requirements of the specific design. It could be understood that, in the other embodiments, rotation of the case 32 can be achieved by means of manual operations, in which case the case 32 is directly connected to the mounting part 16b.

Referring to Figs. 5, 1 and 2, when the head-mounted electronic device 8 is to be worn, the two earphones 10 are firstly stretched outwards, the whole head-mounted electronic device 8 is then worn on head of the user from the front of the face, and the earphone covers 14 cover ears of the user. The display member 30 is located at the first position in right front of eyes, and the dimming part 24 is in the light shielding state, in which case the display member 30 projects the image lights to eyes of the user, such that the user can see an enlarged virtual image of the image. When the user needs to see a scene outside of the covering member 20, the power source 32 controls the case 32 to rotate downwards to the second position which is below eyes and cannot influence sight of eyes, in which case the dimming part 24 turns to be in the light transmitting state, and allows the exterior lights to enter eyes of the user. It should be noted that, a control of switching of the display member 30 between the first position and the second position, a control of switching of the dimming part 24 between the light shielding state and the light transmitting state, a control of display of images produced by the display member 30 and a system control such as volume and progress adjustments performed during the process of image watching all can be implemented by operating the touch device 19 correspondingly, and a central processing unit of the head-mounted electronic device 8 and the corresponding functional circuit (not shown in the drawings) respond the operation to complete the above control. Thus, the user can easily switch between watching the image displayed by the head-mounted electronic device 8 and the scene of an external environment of the head-mounted electronic device 8 without taking off the head-mounted electronic device 8, thus greatly facilitating the user, thereby improving experience feeling of the user.

In the description of the present invention, terms such as "first" and "second" are used herein for purposes of description and are not intended to indicate or imply relative importance or significance or to imply the number of indicated technical features. Thus, the feature defined with "first" and "second" can comprise one or more of this feature. In the description of the present invention, the term "a plurality of" means two or more than two, unless specified otherwise.

In the description of the present invention, unless specified or limited otherwise, the terms "mounted," "connected," "coupled," "fixed" and the like are used broadly, and can be, for example, fixed connections, detachable connections, or integral connections; can also be mechanical or electrical connections; can also be direct connections or indirect connections via intervening structures; can also be inner communications of two elements, which can be understood by those skilled in the art according to specific situations.

The above are just preferable embodiments of the present disclosure, and should not be used to limit the present disclosure. Any modifications, equivalent replacement and improvement within the spirit and principle of the present disclosure should be comprised in the protection scope of the present disclosure.

## Claims

1. A head-mounted electronic device comprising:
two earphones;
one covering member connecting to the two earphones and comprising a dimming part with a changeable transparency in the front of eyes of a user; and
two display members configured for displaying and projecting an image outwards, each of the two display members rotatably connecting to one corresponding earphone and capable of rotating to a first position in front of the eyes and a second position staggering the eyes;
wherein, at the first position, the dimming part is in a light shielding state, and at the second position, the dimming part is in a light transmitting state.

2. The head-mounted electronic device according to claim 1, wherein at the first position, the display members display and project the image lights outwards, and at the second position, the display members do not display the image lights.

3. The head-mounted electronic device according to claim 1, wherein a side wall of at least one of the two earphones is provided with a touch device for controlling the head-mounted electronic device, the side wall is far away from another earphone.

4. The head-mounted electronic device according to claim 1, wherein the covering member is C-shaped, and comprises an upper part, a lower part and a middle part; the upper part is adjacent to forehead of the user, the lower part is far away from the forehead, and the middle part locates between the upper part and the lower part and protrudes outwards in a direction of departing away from the earphones.

5. The head-mounted electronic device according to claim 4, wherein a middle position of the lower part is concaved to the middle part and forms one notch.

6. The head-mounted electronic device according to claim 1, wherein when the user wears the head-mounted electronic device, the covering member comprises one dimming part, the dimming part extends from the front of a left eye of the user to the front of a right eye of the user.

7. The head-mounted electronic device according to claim 1, wherein when worn by the user, the covering member comprises two dimming parts and a connecting member, each of the two dimming parts respectively locates in front of left and right eyes of the user, the connecting member connects the two dimming parts and performs no dimming function.

8. The head-mounted electronic device according to claim 1, wherein the covering member comprises two connecting parts and two adjusting parts, each of the two connecting parts respectively connects with the two earphones, each of the two adjusting parts connects the respective connecting parts and the dimming part, each adjusting parts adjusts a distance between the corresponding connecting part and the dimming part.

9. The head-mounted electronic device according to claim 8, wherein each earphone comprises a cylinder-shaped wall, each connecting part is ring-shaped and sleeved over the cylinder-shaped wall.

10. The head-mounted electronic device according to claim 1, wherein the covering member further comprises at least one contact member, the at least one contact member contacts with face of the user.

11. The head-mounted electronic device according to claim 10, wherein the at least one contact member further prevents external lights from entering the eyes of the user.

12. The head-mounted electronic device according to any one of claims 1-11, wherein the dimming part is made from an electrochromic element or a liquid crystal display screen, the liquid crystal display screen comprises a transparent TTF base.

13. The head-mounted electronic device according to claim 1, wherein each earphone comprises one mounting part, each display member comprises one case and an optical display module accommodated in the case, a side of the case rotatably connects to the mounting part, and another opposite side defines a light outlet to let lights of the optical display module to pass through.

14. The head-mounted electronic device according to claim 13, wherein each earphone further comprises one power source disposing to the mounting part, the case connects to the power source and rotates under a drive of the power source.

15. The head-mounted electronic device according to claim 13, wherein the optical display module comprises one image source, one first lens module, one refractive lens module and one second lens module arranged in sequence.
